**Europäisches Patentamt**

**European Patent Office**

**Office européen des brevets**

(19)

(11) Veröffentlichungsnummer: **0 223 998**
**B1**

(12) **EUROPÄISCHE PATENTSCHRIFT**

(45) Veröffentlichungstag der Patentschrift:
15.03.89

(21) Anmeldenummer: **86114101.8**

(22) Anmeldetag: **11.10.86**

(51) Int. Cl.⁴: **B05D 3/14**, B29C 71/04,
B05B 13/06

(54) **Verfahren und Vorrichtung zur ein-oder mehrfachen Beschichtung der Oberflächen, vorzugsweise der inneren Oberfläche eines offenen Hohlkörpers aus Kunststoff.**

(30) Priorität: **23.10.85 DE 3537614**

(43) Veröffentlichungstag der Anmeldung:
**03.06.87 Patentblatt 87/23**

(45) Bekanntmachung des Hinweises auf die Patenterteilung:
**15.03.89 Patentblatt 89/11**

(84) Benannte Vertragsstaaten:
**AT BE ES FR GB IT SE**

(56) Entgegenhaltungen:
**DE-A- 1 546 972**
**DE-A- 3 203 806**

(73) Patentinhaber: **Kalwar, Klaus, Alte Landwehr 10,
D-4803 Steinhagen(DE)**

(72) Erfinder: **Kalwar, Klaus, Alte Landwehr 10,
D-4803 Steinhagen(DE)**
Erfinder: **Gumpert, Fritz, Azaleenstrasse 2,
D-4803 Steinhagen(DE)**
Erfinder: **Freytag, Egon, Hauptstrasse 122,
D-4802 Halle(DE)**
Erfinder: **Daelmann, Koen, Falkenstrasse 18,
D-4803 Steinhagen(DE)**
Erfinder: **Gerdes, Ernst, Henkelbrey 6,
D-4270 Dorsten(DE)**

(74) Vertreter: **Stracke, Alexander, Dipl.-Ing. et al,
Jöllenbecker Strasse 164, D-4800 Bielefeld 1(DE)**

ACTORUM AG

**Beschreibung**

Die Erfindung bezieht sich auf ein Verfahren zur Vorbehandlung für das ein- oder mehrfache Beschichten der Innenfläche eines offenen Hohlkörpers aus Kunststoff, insbesondere aus unpolarem Kunststoff, durch elektrische Koronaentladung mittels zweier Elektroden, von denen eine im Inneren des Hohlkörpers und die andere an dessen äußerer Oberfläche vorgesehen wird.

Die Erfindung betrifft ferner eine Vorrichtung zur Durchführung des Verfahrens, bei der vorzugsweise die innere Elektrode an Masse und die äußere, sich der Kontur des Kunststoffteiles anpassende Elektrode an einen Hochspannung erzeugenden Generator angeschlossen ist.

Es gibt in Kunststoffbehältern zu transportierende oder zu lagernde Stoffe, die je nach der Art ihres Aggregatzustandes, ihrer spezifischen Dichte oder Viskosität durch die Wandung des Kunststoffbehälters diffundieren, was sich insbesondere auf Umwelteinflüsse sowie auf entstehende Kosten nachteilig auswirkt. Die Kunststoffbehälter werden an ihrer Innenfläche mit einer Schutzschicht, beispielsweise einer Lackschicht, versehen, um die genannte Diffusion zu verhindern.

Es ist bekannt (DE-A 1 546 972, auf welcher der Oberbegriff der Ansprüche 1 und 3 basiert), um eine einwandfreie Lackierung zu ermöglichen, die häufig aus unpolarem Kunststoff hergestellten Hohlkörper einer Koronaentladung zu unterziehen, durch die die Adhäsionskräfte des Kunststoffs erhöht werden und eine bessere Lackierung des Kunststoffbehälters möglich wird.

Zur Erzeugung einer Koronaentladung wird in das Innere des Hohlkörpers eine an Masse angeschlossene Elektrode eingebracht, während eine äußere Elektrode mit einem Hochspannung erzeugenden Generator verbunden ist. Insbesondere dann, wenn, was sehr häufig ist, der Hohlkörper eine komplizierte Kontur aufweist, ergeben sich Schwierigkeiten die innere Elektrode so anzubringen, daß eine gleichmäßige Koronaentladung ermöglicht wird. Dabei wirkt besonders erschwerend, daß die Einfüllöffnung des Hohlkörpers gegenüber dem Fassungsraum sehr oft relativ klein gehalten wird, so daß eine einwandfreie Plazierung der inneren Elektrode äußerst problematisch ist.

Eine einwandfreie Anordnung der inneren Elektrode mit einem gleichmäßigen Abstand zur Behälterinnenwand, was eine Voraussetzung zur gleichmäßigen Koronabehandlung ist, ist deshalb bislang praktisch nicht möglich.

Es ist ferner bekannt, die Innenfläche des Kunststoffhohlkörpers mit einer zweiten Beschichtung zu versehen, um eine größere Gasdichtigkeit der Wandung des Kunststoffhohlkörpers zu erzielen. Da ·hierfür im wesentlichen Lacke Verwendung finden, die in der Regel selbst auf polymerer Basis aufgebaut sind, d.h. deren Adhäsionskräfte ebenso gering sein können wie der unpolaren Kunststoffe, ergibt sich bei einer zweiten Beschichtung sowohl das Problem der Haftung auf der ersten Schicht allgemein als auch das Problem des gleichmäßigen Verteilens dieser zweiten Schicht. Wesentlich für eine einwandfreie Gasdichtigkeit des Kunststoffteiles ist jedoch eine an jeder Stelle der Innenfläche des Kunststoffhohlkörpers gleiche Beschichtung.

Der Erfindung liegt die Aufgabe zugrunde, ein Verfahren der eingangs genannten Art so zu gestalten, daß rationell und damit kostengünstig eine an jeder Stelle gleichmäßige ein- oder mehrfache Beschichtung der Innenfläche eines offenen Hohlkörpers möglich wird, so daß die Gasdichtigkeit des Hohlkörpers insgesamt verbessert wird.

Diese Aufgabe wird erfindungsgemäß dadurch gelöst, daß ein der Innenfläche des Hohlkörpers zugeordnetes, die innere Elektrode bildendes, fließ-, strömungs- und rieselfähiges Medium, welches zu Beginn der Koronaentladung die Innenfläche gleichmäßig bedeckt, während der Koronaentladung entweder kontinuierlich aus dem Hohlkörper entweicht oder aber über die gesamte Innenfläche bewegt wird.

Eine Koronaentladung erfolgt dort, wo die Elektrode an einen Freiraum angrenzt. Bei einer Koronaentladung nach dem erfindungsgemäßen Verfahren verändert sich kontinuierlich die Lage der Elektrode, und zwar bei einer vorteilhaften Ausgestaltung der Erfindung, bei der die Öffnung des Kunststoffhohlkörpers in Fallrichtung des Mediums zeigt, mit einer Geschwindigkeit, die steuerbar ist, so daß auch auf die Dauer der Koronaentladung Einfluß genommen werden kann.

Da das die innere Elektrode bildende Medium strömungs-, fließ- oder rieselfähig ist, kann der Innenraum des Kunststoffhohlkörpers vollständig mit diesem Medium ausgefüllt werden, so daß auch die Innenfläche bei kompliziertesten Konturen vollständig bedeckt ist. Dies bedeutet, daß die Stärke der Koronaentladung, insbesondere unter dem Aspekt des kontinuierlichen Entweichens des Mediums, an jeder Stelle der Innenfläche gleich ist, so daß eine Beschichtung, deren Stärke von den Adhäsionskräften des Kunststoffhohlkörpers abhängig ist, ebenfalls an jeder Stelle der Innenfläche gleichmäßig ist.

Das Medium selbst, also die innere Elektrode, kann aus vielerlei Materialien bestehen. So ist beispielsweise ein Medium denkbar, das aus einer Flüssigkeit, beispielsweise aus Wasser, aus einem Gas, beispielsweise aus Argon, Neon od. dgl. oder aus Feststoffkörpern, beispielsweise aus Quarzgranulat, besteht. Die Feststoffkörper können auch aus Metallen, Nichtmetallen oder hydrophilen Mineralien in unterschiedlichsten Raumformen wie Kugeln, Quadraten, Rechtecken od. dgl. vollvolumig oder hohl gebildet sein. In jedem Fall sollte das Medium aus einem Leiter oder Halbleiter bestehen.

Um eine weitere Erhöhung der Gasdichtigkeit zu erzielen, ist ferner erfindungsgemäß vorgesehen, daß eine Koronabehandlung vor dem Auftragen einer ersten Innenbeschichtung vorgenommen wird und·die erste Beschichtung einer weiteren Koronabehandlung vor dem Auftragen einer weiteren Beschichtung ausgesetzt wird.

Nach diesem Verfahren kann eine Vielzahl von einzelnen Schichten übereinander angeordnet werden, die sich durch eine an allen Stellen der Innenfläche des Hohlkörpers gleiche Dicke auszeichnen. Unerheblich ist dabei die Anzahl der aufeinanderfolgenden und übereinanderliegenden Beschichtungen.

Nach einer vorteilhaften Ausgestaltung der Erfindung besteht das Medium aus einer rieselfähigen, gekörnten und gelartigen Lackmasse, die als Elektrode fungiert, aber auch nach einer Koronaentladung in Form von Aerosolen als Lackschicht auf die Innenfläche des Kunststoffhohlkörpers aufgebracht wird. Insbesondere dann, wenn als Lackmasse ein hydrophiles Medium eingesetzt wird, kann die innere Elektrode dampfförmig in den Hohlkörper eingebracht werden, wobei dann das Wasser die leitfähige Substanz darstellt und im Sinne der Erfindung durch Verdunsten oder Ablaufen positionsverändernd bewegt wird.

Weitere vorteilhafte Ausgestaltungen der Erfindung sind in den Unteransprüchen gekennzeichnet.

Ausführungsbeispiele der Erfindung sind nachfolgend anhand beigefügter Zeichnungen beschrieben. Es zeigen:

Fig. 1 den Aufbau einer erfindungsgemäßen Vorrichtung in schematischer Darstellung.

Fig. 2 ein Ausführungsbeispiel einer Vorrichtung nach der Erfindung in perspektivischer Darstellung,

Fig. 3 und 4 die Vorrichtung in verschiedenen Arbeitsstellungen,

Fig. 5 und 6 ein weiteres Ausführungsbeispiel einer Vorrichtung in unterschiedlichen Arbeitsstellungen,

Fig. 7 bis 9 das erfindungsgemäße Verfahren, dargestellt anhand unterschiedlicher Verfahrensschritte und

Fig. 10 einen weiteren Verfahrensschritt nach der Erfindung.

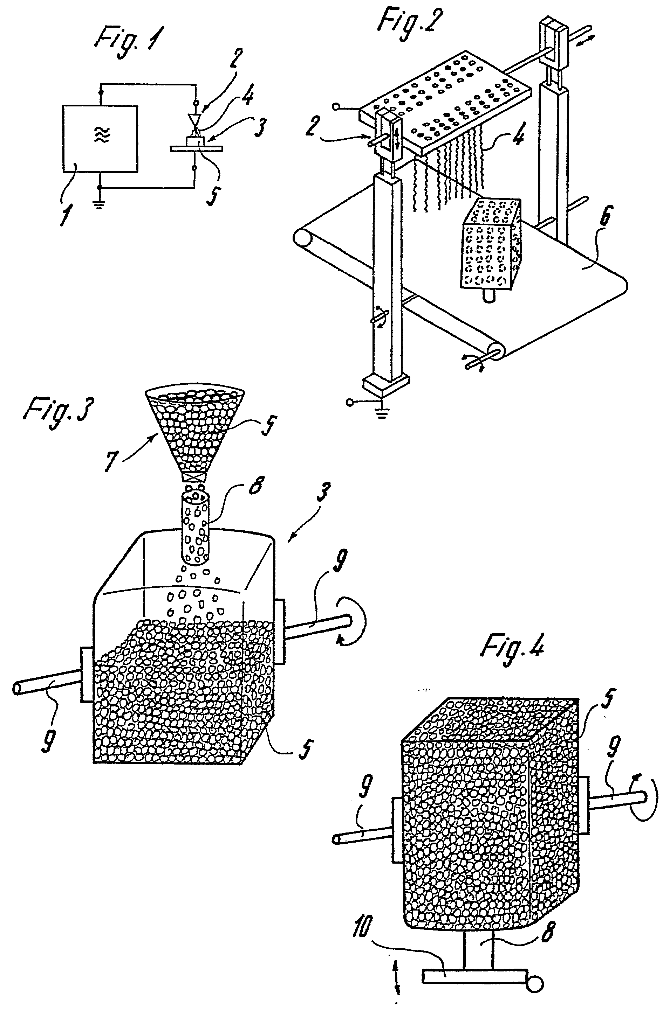

Der in der Figur 1 schematisch dargestellte Aufbau einer Vorrichtung zum Erzeugen einer Koronaentladung auf der Oberfläche eines Kunststoffteiles zeigt zunächst die hauptsächlichen Bestandteile einer derartigen Vorrichtung. Dazu gehören ein Generator 1, mit dem eine hochfrequente Hochspannung erzeugt wird, sowie eine an dem Generator 1 angeschlossene äußere Elektrode 2 und eine an Masse liegende innere Elektrode 5, die die innere Oberfläche eines Hohlkörpers 3 aus Kunststoff bedeckt. Bestandteil der äußeren Elektrode 2 sind Ketten 4, wie sie besonders deutlich in der Figur 2 zu erkennen sind.

Die Glieder der freihängenden Ketten 4 erzeugen im Zusammenwirken mit der inneren Elektrode 5, die erfindungsgemäß aus einem die innere Oberfläche des Hohlkörpers 3 abdeckenden Medium besteht, eine Koronaentladung, mit deren Hilfe auf der entsprechenden Oberfläche des unpolaren Kunststoffteiles Adhäsionskräfte erzeugt werden, die zur Beschichtung des Kunststoffteiles erforderlich sind. In der Figur 2 ist der Hohlkörper 3 auf einem Transportband 6 angeordnet, das in seiner Lage durch Drehen von Kurbeln in Pfeilrichtung veränderbar ist. Auch die Lage der äußeren Elektrode 2 ist veränderbar und zwar in Querrichtung ebenso wie in ihrer Höhe gegenüber dem Hohlkörper 3, gleichfalls gekennzeichnet durch die eingezeichneten Pfeile.

Die verschiedenen Bewegungsmöglichkeiten sowohl des Transportbandes 6 als auch der äußeren Elektrode 2 und mit ihr der freihängenden Ketten 4 sind insofern vorteilhaft, als die nach dem erfindungsgemäßen Verfahren zu behandelnden Kunststoffteile äußerst vielgestaltige Konturen in ihrer Oberfläche aufweisen können, so daß in jedem Fall eine Anpassung an die Oberfläche erfolgen kann.

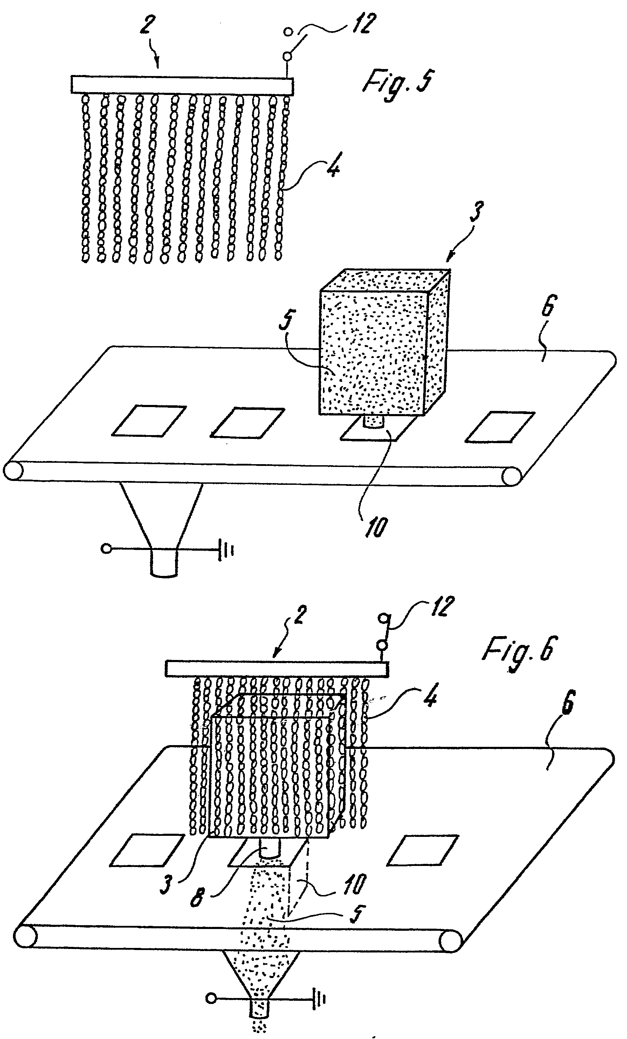

Bei dem in den Figuren 3 und 4 dargestellten Ausführungsbeispiel einer erfindungsgemäßen Vorrichtung besteht das die innere Elektrode 5 bildende Medium aus einem rieselfähigen Quarzgranulat hoher elektrischer Leitfähigkeit. In der Figur 3 ist dargestellt, wie zunächst der Hohlkörper 3 mit Hilfe eines Trichters 7 über eine Einfüllöffnung 8 des Hohlkörpers 3 mit dem Medium gefüllt wird. Zwei sich gegenüberliegende Greifer 9 halten den Hohlkörper 3 in einer bestimmten Position und wenden ihn nach dem Befüllen mit dem Medium entsprechend der Pfeilrichtung wie sie auch in der Figur 4 zu erkennen ist. Nach der Drehung, bei der dann die Einfüllöffnung 8 in Fallrichtung des Mediums liegt, und die zunächst noch von einem Ventil 10 verschlossen ist, erfolgt das Öffnen des Ventils 10 und das Medium der inneren Elektrode 5 kann kontinuierlich aus der Einlauföffnung 8 entweichen.

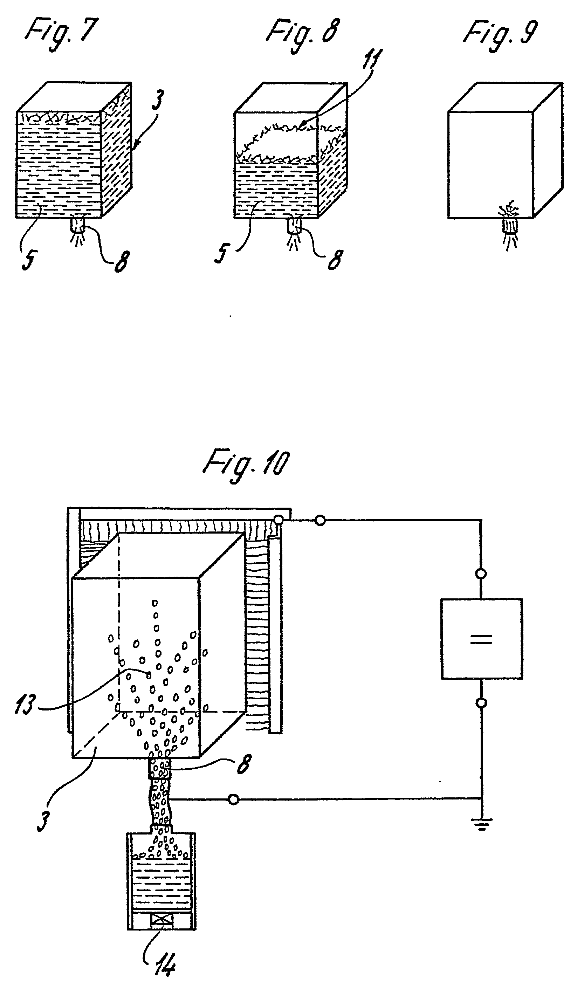

Dieser Vorgang ist besonders deutlich in den Figuren 7 bis 9 zu erkennen. Dabei ist das Medium als Flüssigkeit, beispielsweise als Wasser dargestellt. In der Figur 7 ist der Hohlkörper 3 in vollständig mit dem Medium gefülltem Zustand dargestellt. Die Einfüllöffnung 8 befindet sich dabei schon in Fall- bzw. Fließrichtung des Mediums. In der Figur 8 ist die Koronaentladung zu erkennen, die im Bereich der inneren Elektrode 5 zum gebildeten inneren Freiraum des Hohlkörpers 3 stattfindet. Im vorliegenden Ausführungsbeispiel entspricht dies der umlaufenden Linie 11, die gleichzeitig den Spiegel des Mediums darstellt. Die Geschwindigkeit der Koronaentladung und somit ihre Intensität kann gesteuert werden, durch die Auslaufgeschwindigkeit des Mediums, die wiederum durch das Ventil 10 beeinflußbar ist. Die Figur 9 zeigt den Hohlkörper 3 nach vollständigem Auslaufen des Mediums 5 also nach vollständig erfolgter Koronaentladung.

Bei der in den Figuren 5 und 6 gezeigten Vorrichtung ist der Hohlkörper 3 auf einem Transportband 6 entsprechend dem in der Figur 2 dargestellten angeordnet. Dabei befindet sich die Einfüllöffnung 8 in Fallrichtung der inneren Elektrode 5 und wird wie in der Figur 5 dargestellt zunächst durch das Ventil 10 verschlossen. Durch den geöffneten Schalter 12 liegt auf der äußeren Elektrode 2 noch keine Hochspannung an, so daß eine Koronaentladung auch bei Berührung der Ketten 4 mit dem Hohlkörper 3 nicht möglich wäre.

Dies ist erst bei der in der Figur 6 gezeigten Stellung des Transportbandes 6 bzw. des Hohlkörpers 3 der Fall, in der der Schalter 12 geschlossen, der Hohlkörper 3 vollständig von den Ketten 4 der äußeren Elektrode 2 überdeckt, das Ventil 10 geöffnet ist und das Medium 5 aus der Einfüllöffnung 8 austreten kann. Entsprechend der Änderung des Mediumspiegels innerhalb des Hohlkörpers 3 erfolgt auch die Koronaentladung an der inneren Oberfläche des Hohlkörpers 3. Das Ventil 10 ist bei dem in den Figuren 5 und 6 dargestellten Ausführungsbeispiel als verschließbare Klappe ausgebildet.

Bei dem in der Figur 10 gezeigten Hohlkörper 3 ist bereits eine Koronabehandlung erfolgt. Die so behandelte innere Oberfläche wird nun mit Lackaerosolen 13 beaufschlagt, die durch Ultraschallschwinger 14 erzeugt werden und wobei gleichzeitig auf den Hohlkörper 3 eine hohe Gleichspannung angelegt wird. Durch diesen elektrostatischen Lackauftrag in Kombination mit einer vorher durchgeführten Koronabehandlung erfolgt eine besonders gleichmäßige Beschichtung der inneren Oberfläche des Hohlkörpers 3. Nach einer ersten Beschichtung des Hohlkörpers 3 erfolgt vor einer weiteren Beschichtung eine Koronabehandlung, da erst so an den häufig verwendeten polymeren Kunststofflacken, die einen unpolaren Charakter aufweisen, die für eine Beschichtung erforderlichen Adhäsionskräfte erzeugt werden können. Dabei ist die Art der Beschichtung zweitrangig, da sowohl durch einen elektrostatischen Lackauftrag wie beschrieben, als auch durch Tauchen oder andere Farbauftragsverfahren eine Beschichtung vorgenommen werden kann.

Ebenfalls denkbar ist es, das Lacksystem nach der Koronabehandlung in Feinstaubform in das Behälterinnere einzubringen und bei Anlegen einer hohen elektrostatischen Gleichspannung eine gleichmäßige Verteilung des Lackes auf der Behälterinnenwand zu erreichen.
Bei anschließender Zuführung von beispielsweise Wasseraerosolen löst sich der Lackstaub zu einer flächendeckenden gleichmäßig aushärtbaren Schicht auf. Dies setzt natürlich voraus, daß das Lacksystem wasseranlöslich ist.

Ein vorteilhafter Gedanke der Erfindung sieht vor, daß der Kunststoffkörper 3 relativ zur äußeren Elektrode 2 nacheinander oder gleichzeitig in mehreren Richtungen bewegbar und drehbar ist. Dadurch wird gewährleistet, daß beispielsweise bei Verwendung der Ketten 4 als Bestandteil der äußeren Elektrode 2 die äußere Oberfläche des Kunststoffkörpers 3 von den Ketten 4 gleichmäßig bestrichen wird, so daß mit Sicherheit eine einwandfreie Koronaentladung erfolgt.

Bezugszeichenliste

1 Generator
2 äußere Elektrode
3 Hohlkörper
4 Ketten
5 innere Elektrode
6 Transportband
7 Trichter
8 Einfüllöffnung
9 Greifer
10 Ventil
11 Linie
12 Schalter
13 Lack-Aerosol
14 Ultraschallschwinger

Patentansprüche

1. Verfahren zur Vorbehandlung für das ein- oder mehrfache Beschichten der Innenfläche eines offenen Hohlkörpers (3) aus Kunststoff, insbesondere aus unpolarem Kunststoff, durch elektrische Koronaentladung mittels zweier Elektroden (2, 5), von denen eine (2) im Inneren des Hohlkörpers (3) und die andere (5) an dessen äußerer Oberfläche vorgesehen wird, dadurch gekennzeichnet, daß ein der Innenfläche des Hohlkörpers (3) zugeordnetes, die innere Elektrode (2) bildendes, fließ-, strömungs- oder rieselfähiges Medium, welches zu Beginn der Koronaentladung die Innenfläche gleichmäßig bedeckt, während der Koronaentladung entweder kontinuierlich aus dem Hohlkörper (3) entweicht oder aber über die gesamte Innenfläche bewegt wird.

2. Verfahren nach Anspruch 1, dadurch gekennzeichnet, daß eine Koronabehandlung vor dem Auftragen einer ersten Innenbeschichtung vorgenommen wird und die erste Beschichtung einer weiteren Koronabehandlung vor dem Auftragen einer weiteren Beschichtung ausgesetzt wird.

3. Vorrichtung zur Durchführung des Verfahrens nach Anspruch 1 oder 2, bei der vorzugsweise die innere Elektrode (5) an Masse und die äußere, sich der Kontur des Kunststoffteiles (3) anpassende Elektrode (2) an einen Hochspannung erzeugenden Generator (1) angeschlossen ist, dadurch gekennzeichnet, daß die innere Elektrode (5) aus einem strömungs-, fließ- oder rieselfähigen Medium hoher elektrischer Leitfähigkeit besteht.

4. Vorrichtung nach Anspruch 3, dadurch gekennzeichnet, daß das Medium aus einer Flüssigkeit, beispielsweise aus Wasser besteht.

5. Vorrichtung nach Anspruch 3, dadurch gekennzeichnet, daß das Medium aus einem Gas, beispielsweise Argon, Neon od. dgl. besteht.

6. Vorrichtung nach Anspruch 3, dadurch gekennzeichnet, daß das Medium als elektrisch leitender oder halbleitender Feststoffkörper, beispielsweise als Quarzgranulat, Metall, Nichtmetall oder hydrophiles Mineral in unterschiedlichen Raumformen wie Kugeln, Quadraten, Rechtecken od. dgl. vollvolumig oder hohl ausgebildet ist.

7. Vorrichtung nach Anspruch 3, dadurch gekennzeichnet, daß das Medium aus einer rieselfähigen, gekörnten und gelartigen Lackmasse besteht.

8. Vorrichtung nach Anspruch 3, dadurch gekennzeichnet, daß das Medium aus einem hydrophilen Beschichtungslack besteht.

9. Vorrichtung nach Anspruch 3, dadurch gekennzeichnet, daß das Medium aus einem Beschichtungslack besteht, der als Lackaerosol in den Hohlkörper eingebracht ist.

10. Vorrichtung nach Anspruch 3, dadurch gekennzeichnet, daß das Medium aus einem wasseranlöslichen Feinstaublack besteht.

11. Vorrichtung zur Durchführung des Verfahrens nach Anspruch 1 oder 2, dadurch gekennzeichnet, daß das Entweichen des Mediums steuerbar ist, wobei das Medium über die Öffnung des Hohlkörpers (3) entweicht.

12. Vorrichtung nach Anspruch 11, dadurch gekennzeichnet, daß das Entweichen des Mediums mittels einer die Öffnung (8) des Hohlkörpers (3) verschließenden Einrichtung steuerbar ist.

13. Vorrichtung nach Anspruch 12, dadurch gekennzeichnet, daß die Einrichtung als Ventil (10) ausgebildet ist.

14. Vorrichtung nach Anspruch 13, dadurch gekennzeichnet, daß das Ventil (10) eine bewegliche Klappe aufweist.

15. Vorrichtung nach einem der Ansprüche 11 bis 13, dadurch gekennzeichnet, daß beim Entweichen des Mediums die Öffnung (8) des Hohlkörpers (3) in Fallrichtung des Mediums weist.

16. Vorrichtung nach Anspruch 3, dadurch gekennzeichnet, daß das Kunststoffteil (3) relativ zur äußeren Elektrode (2) nacheinander oder gleichzeitig in mehreren Richtungen bewegbar und drehbar ist.

## Claims

1. A process for the pretreatment for single or multiple coating of the inside surface of an open hollow body (3) of plastics material, in particular nonpolar plastics material, by electrical corona discharge by means of two electrodes (2, 5) of which one is disposed in the interior of the hollow body (3) and the other (5) is disposed at the outside surface thereof, characterised in that a medium which is fluid or capable of flow or capable of trickle flow and which is associated with the inside surface of the hollow body (3) and which forms the inner electrode (2) and which uniformly covers the inside surface at the beginning of the corona discharge either continuously escapes from the hollow body (3) or is moved over the entire inside surface, during the corona discharge.

2. A process according to claim 1 characterised in that corona treatment is effected prior to the application of a first internal coating and the first coating is exposed to a further corona treatment prior to the application of a further coating.

3. Apparatus for carrying out the process according to claim 1 or claim 2 wherein preferably the inner electrode (5) is connected to earth and the outer electrode (2) which matches the contour of the plastics member (3) is connected to a generator (1) for producing a high voltage, characterised in that the inner electrode (5) comprises a medium of high electrical conductivity, which is fluid, capable of flow or capable of trickle flow.

4. Apparatus according to claim 3 characterised in that the medium comprises a liquid, for example water.

5. Apparatus according to claim 3 characterised in that the medium comprises a gas, for example argon, neon or the like.

6. Apparatus according to claim 3 characterised in that the medium is in the form of an electrically conductive or semiconductor solid body, for example quartz granulate, metal, non-metal or hydrophilic mineral, in different three-dimensional forms such as balls, square shapes, rectangular shapes or the like, of solid or hollow configuration.

7. Apparatus according to claim 3 characterised in that the medium comprises a granulated and gel-like lacquer material which is capable of trickle flow.

8. Apparatus according to claim 3 characterised in that the medium comprises a hydrophilic coating lacquer.

9. Apparatus according to claim 3 characterised in that the medium comprises a coating lacquer which is introduced into the hollow body in the form of a lacquer aerosol.

10. Apparatus according to claim 3 characterised in that the medium comprises a water-soluble fine powder lacquer.

11. Apparatus for carrying out the process according to claim 1 or claim 2 characterised in that the escape of the medium is controllable, wherein the medium escapes by way of the opening of the hollow body (3).

12. Apparatus according to claim 11 characterised in that escape of the medium is controllable by means of a device for closing the opening (8) of the hollow body (3).

13. Apparatus according to claim 12 characterised in that the device is in the form of a valve (10).

14. Apparatus according to claim 13 characterised in that the valve (10) has a movable flap.

15. Apparatus according to one of claims 11 to 13 characterised in that when the medium escapes the opening (8) of the hollow body (3) faces in the direction in which the medium falls.

16. Apparatus according to claim 3 characterised in that the plastics member (3) is movable and rotatable relative to the outer electrode (2) in succession or simultaneously in a plurality of directions.

## Revendications

1. Procédé de traitement préparatoire pour l'enduction unique ou multiple de la surface intérieure d'un corps creux (3) en plastique, et particulièrement en plastique non polaire, par décharge électrique en effet de couronne au moyen de deux électrodes (2, 5), dont l'une (5) est prévue à l'intérieur du corps creux (3) et l'autre (2) sur la surface supérieure extérieure de celui-ci, caractérisé en ce qu'un milieu coulant à écoulement ou courant libre formant l'électrode intérieure (5) est associé à la surface intérieure du corps creux (3) et la recouvre uniformément au début de la décharge en effet de couronne, tandis qu'au cours de cette dernière, soit il s'échappe de façon continue hors de la pièce creuse (3), soit il est déplacé sur l'ensemble de la surface intérieure.

2. Procédé selon la revendication 1, caractérisé en ce que l'on effectue un traitement par effet de couronne avant l'application d'une première enduction intérieure qui est interrompue par un traitement par effet de couronne supplémentaire avant l'application d'une autre enduction.

3. Dispositif pour la mise en œuvre du procédé selon la revendication 1 ou la revendication 2, dans lequel l'électrode intérieure (5) est de préférence reliée à la masse et l'électrode extérieure (2), s'assimilant au contour de la pièce en plastique (3), est, de préférence, reliée à un générateur haute tension (1), caractérisé en ce que l'électrode intérieure (5) est constituée par un milieu coulant à écoulement ou courant libre et à haute conductibilité électrique.

4. Dispositif selon la revendication 3, caractérisé en ce que le milieu est constitué par un liquide tel que l'eau.

5. Dispositif selon la revendication 3, caractérisé en ce que le milieu est constitué par un gaz tel que l'argon, le néon ou similaire.

6. Dispositif selon la revendication 3, caractérisé en ce que le milieu est formé de corps solides conducteurs ou semi-conducteurs électriques tels que des granulés de quartz, des métaux, des non-métaux ou des minéraux hydrophiles sous diverses formes comme des billes, des carrés, des rectangles ou autres, pleins ou creux.

7. Dispositif selon la revendication 3, caractérisé en ce que le milieu est constitué par une masse de laque coulante comme un gel et en granulés.

8. Dispositif selon la revendication 3, caractérisé en ce que le milieu est constitué par une laque d'enduction hydrophile.

9. Dispositif selon la revendication 3, caractérisé en ce que le milieu est constitué par une laque d'enduction qui est amenée dans le corps creux (3) sous forme d'aérosol.

10. Dispositif selon la revendication 3, caractérisé en ce que le milieu est constitué par une laque de poudre fine insoluble dans l'eau.

11. Dispositif pour la mise en œuvre du procédé selon la revendication 1 ou la revendication 2, caractérisé en ce que l'échappement du milieu est contrôlable lorsqu'il s'échappe par l'ouverture (8) du corps creux (3).

12. Dispositif selon la revendication 11, caractérisé en ce que l'échappement du milieu est contrôlable au moyen d'un système de fermeture de l'ouverture (8) du corps creux (3).

13. Dispositif selon la revendication 12, caractérisé en ce que ce système est conçu comme un clapet (10).

14. Dispositif selon la revendication 13, caractérisé en ce que le clapet (10) comprend un volet mobile.

15. Dispositif selon l'une quelconque des revendications 11 à 13, caractérisé en ce que, lors de l'échappement du milieu, l'ouverture (8) du corps creux (3) est dans la direction de chute du milieu.

16. Dispositif selon la revendication 3, caractérisé en ce que la pièce en plastique (3) est déplaçable en rotation par rapport à l'électrode extérieure (2) successivement ou simultanément dans plusieurs directions.

*Fig.1*

*Fig.2*

*Fig.3*

*Fig.4*

EP 0 223 998 B1

Fig. 5

Fig. 6

*Fig. 7*

*Fig. 8*

*Fig. 9*

*11*

*3*

*5*

*8*

*5*

*8*

*Fig. 10*

*13*

*3*

*3*

*8*

*14*

=